# EUROPEAN PATENT APPLICATION

(11) **EP 4 238 629 A1**
(43) Date of publication of application: **06.09.2023**
(21) Application number: 21886200.1
(22) Date of filing: 26.10.2021
(51) Int. Cl.: B01D 46/52, B60H 3/06, F04D 29/70

(54) **FILTER AND CENTRIFUGAL BLOWER**

(30) Priority: 02.11.2020 JP 2020183722
(71) Applicant: Valeo Japan Co., Ltd., Kumagaya-Shi SAITAMA 360-0193 (JP)
(72) Inventor: KOBINATA, Hiroshi, Kumagaya-shi Saitama 360-0193 (JP); HARA, Keisuke, Kumagaya-shi Saitama 360-0193 (JP); KANAMORI, Ryosuke, Kumagaya-shi Saitama 360-0193 (JP); YOSHIZAKI, Hisayoshi, Kumagaya-shi Saitama 360-0193 (JP)
(74) Representative: Valeo Systèmes Thermiques
(86) International application number: PCT/JP2021/039477
(87) International publication number: WO 2022/092082

(57) **Abstract**

[Problem] To improve a strength and productivity of a filter having a filtration member in a pleated shape.

[Solution] A filter (40) includes a filtration member (41) having partitioned surfaces (43) that are partitioned by mountain-fold pleats (42) and valley-fold pleats (42), and end plates (48, 49) fixed to two end portions of the filtration member (41) and configured to maintain the filtration member (41) in a pleated shape. The filtration member (41) includes a plurality of filtration portions (45a, 45b, and 45c) and intermediate portions (46a, 46b) each provided between the adjacent filtration portions. In the filtration portions (45), an angle formed by the adjacent partitioned surfaces (43, 43) is greater than 0°, and in the intermediate portions (46a, 46b), an angle formed by the adjacent partitioned surfaces (43, 43) is 0°.

## Description

### Technical Field

The present invention relates to a filter and a centrifugal blower including the filter.

### Background Art

In general, a blower used in an air conditioner for a vehicle incorporates a filter for removing dust and the like in air taken into the blower. The filter includes a filtration member in a pleated shape and a frame supporting the filtration member. PTL 1 discloses such a filter.

Incidentally, in recent years, it is desired to improve strength and productivity of such a filter.

### Citation List

### Patent Literature

PTL 1: JP-A-2013-132637

### Summary of Invention

### Technical Problem

An object of the invention is to improve productivity of a filter and improve strength of the filter. In addition, another object of the invention is to provide a centrifugal blower using such a filter, by which a risk of unintentionally mixing two types of air with different properties is reduced.

### Solution to Problem

A preferred embodiment of the invention provides a filter including:
a filtration member in which mountain-fold pleats and valley-fold pleats are alternately formed and that has a partitioned surface partitioned by the mountain-fold pleat and the valley-fold pleat; and
end plates fixed to two end portions of the filtration member in a direction in which the mountain-fold pleats and the valley-fold pleats extend and configured to maintain the filtration member in a pleated shape, in which
the filtration member includes a plurality of filtration portions and intermediate portions each provided between the adjacent filtration portions, the plurality of filtration portions and the intermediate portions being arranged along a direction in which the mountain-fold pleats and the valley-fold pleats are arranged and each including a plurality of the partitioned surfaces,
in the filtration portions, an angle formed by the adjacent partitioned surfaces is greater than 0°, and
in the intermediate portions, an angle formed by the adjacent partitioned surfaces is 0°.

Alternatively, another preferred embodiment of the invention provides a centrifugal blower for a vehicle including:
a motor;
a first impeller including a plurality of blades forming a first circumferential blade row, rotationally driven by the motor around a rotation axis extending in an axial direction, and configured to blow out air in a radially inner space of the first blade row toward a radially outer side;
a second impeller including a plurality of blades forming a second circumferential blade row, rotationally driven by the motor around the rotation axis, and configured to blow out air in a radially inner space of the second blade row toward a radially outer side;
a blower case including a first scroll configured to accommodate the first impeller, including a first suction port opening in the axial direction and a first discharge port opening in a circumferential direction, and configured to send out, from the first discharge port by rotation of the first impeller, air suctioned from the first suction port, and a second scroll configured to accommodate the second impeller, including a second suction port opening in the axial direction and a second discharge port opening in a circumferential direction, and configured to send out, from the second discharge port by rotation of the second impeller, air suctioned from the second suction port;
an air intake housing connected to the blower case, configured to accommodate the above filter therein, and including outside air introduction ports configured to take in outside air of a vehicle, inside air introduction ports configured to take in inside air of the vehicle, an upstream air introduction space serving as an air passage between the outside air introduction ports and the filter and between the inside air introduction ports and the filter, and a downstream air introduction space configured to accommodate the filter and serving as an air passage between the upstream air introduction space and the blower case, in which
the upstream air introduction space is provided with partition walls configured to partition the air introduced from the outside air introduction ports and the air introduced from the inside air introduction port,
in the downstream air introduction space, the filter is disposed such that an imaginary plane defined by a direction in which the mountain-fold pleats and the valley-fold pleats extend and a direction in which the mountain-fold pleats and the valley-fold pleats are arranged crosses air flowing through the downstream air introduction space, and
end portions of the partition walls facing the filter and the intermediate portions of the filter are aligned along a flow direction of the air flowing through the downstream air introduction space.

### Advantageous Effects of Invention

According to the above embodiments of the invention, the productivity of the filter can be improved and the strength of the filter can be improved. In addition, according to the embodiments of the invention, a centrifugal blower that reduces a possibility of unintentionally mixing two types of air with different properties can be provided.

### Brief Description of Drawings

[FIG. 1] FIG. 1 is a perspective view of a centrifugal blower according to a first embodiment of the invention.
[FIG. 2] FIG. 2 is a vertical cross-sectional view including a meridian cross section of the centrifugal blower shown in FIG. 1.
[FIG. 3] FIG. 3 is a vertical cross-sectional view including the meridian cross section of the centrifugal blower taken along a cross section orthogonal to the cross section in FIG. 2.
[FIG. 4] FIG. 4 is a perspective view of a separation cylinder.
[FIG. 5] FIG. 5 is a perspective view of a filter.
[FIG. 6] FIG. 6 is a cross-sectional view of the filter shown in FIG. 5 taken along a direction in which fold pleats are arranged.
[FIG. 7] FIG. 7 is a diagram showing a method for manufacturing the filter shown in FIG. 5.
[FIG. 8] FIG. 8 is a diagram showing the method for manufacturing the filter shown in FIG. 5.
[FIG. 9] FIG. 9 is a diagram corresponding to FIG. 6 and showing a modification of the filter.
[FIG. 10] FIG. 10 is another diagram corresponding to FIG. 6 and showing another modification of the filter.
[FIG. 11] FIG. 11 is a diagram corresponding to FIG. 3 and is a vertical cross-sectional view of a centrifugal blower according to a second embodiment.
[FIG. 12] FIG. 12 is a diagram corresponding to FIG. 6 and showing a filter according to the second embodiment.

### Description of Embodiments

### <First Embodiment>

Hereinafter, a first embodiment according to the invention will be described with reference to the following accompanying drawings.

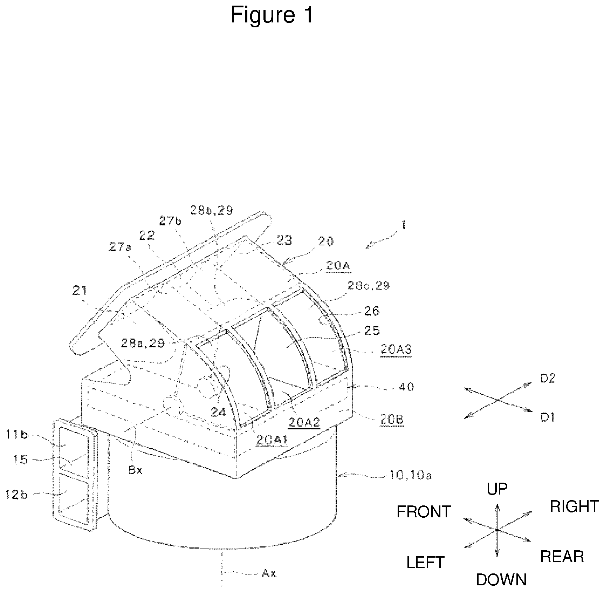

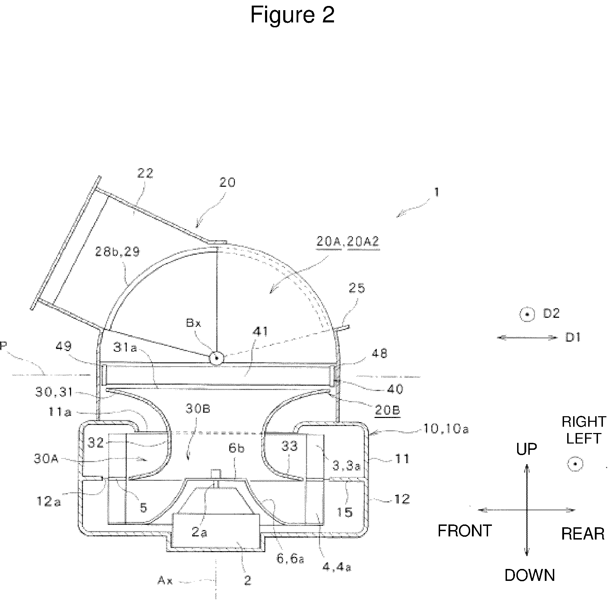

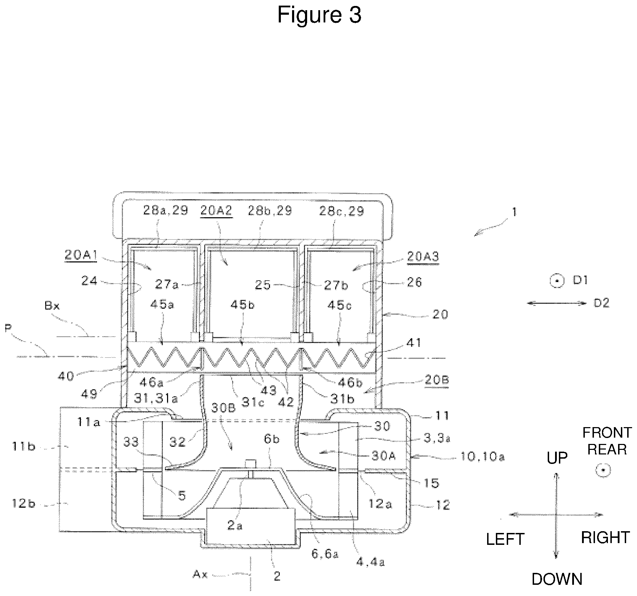

FIG. 1 is a perspective view of a centrifugal blower according to the first embodiment of the invention. FIGS. 2 and 3 are views schematically showing cross sections of the centrifugal blower shown in FIG. 1. FIG. 3 is a diagram showing a cross section orthogonal to the cross section in FIG. 2. In FIGS. 2, 3, and other drawings, an arrow extending along a direction perpendicular to a paper surface is indicated by a symbol in which a point is provided in a circle.

A centrifugal blower 1 shown in FIGS. 1 to 3 is a centrifugal blower incorporated in a vehicle air conditioner, and includes a motor 2, a first impeller 3 and a second impeller 4 that are rotationally driven by the motor 2, a blower case 10 that accommodates the first impeller 3 and the second impeller 4, and an air intake housing 20.

In the present description, for convenience of description, a direction of a rotation axis Ax of the motor 2 and the impellers 3 and 4 is referred to as "axial direction" or "up-down direction", and an upper side and a lower side in FIGS. 2 and 3 are referred to as "one side in the axial direction" or "axial upper side" and "other side in the axial direction" or "axial lower side", respectively. However, accordingly, the direction of the rotation axis Ax is not limited to a vertical direction when the centrifugal blower is actually incorporated into a vehicle. In addition, in the present description, unless there is a special note, a direction of a radius of a circle drawn on a plane orthogonal to the rotation axis Ax with any point on the rotation axis Ax as a center is referred to as a radial direction, and a direction of a circumference of the circle is referred to as a circumferential direction or a peripheral direction.

The first impeller 3 includes, on an outer peripheral portion thereof, a plurality of blades 3a forming a first blade row arranged in the circumferential direction. The first impeller 3 is connected to a rotation shaft 2a of the motor 2, rotationally driven around the rotation axis Ax, and blows out air in a radially inner side of the first blade row of the first impeller 3 toward a radially outer side.

The second impeller 4 also includes, on an outer peripheral portion thereof, a plurality of blades 4a forming a second blade row arranged in the circumferential direction. The second impeller 4 is disposed on a lower side (the other side in the axial direction) of the first impeller 3 and connected to the rotation shaft 2a of the motor 2. Further, the second impeller 4 is rotationally driven around the rotation axis Ax, and blows out air in a radially inner side of the second blade row of the second impeller 4 toward the radially outer side.

The blower case 10 includes a first scroll 11 that accommodates the first impeller 3 and a second scroll 12 that accommodates the second impeller 4.

The first scroll 11 has a first suction port 11a opening in the axial direction and a first discharge port 11b opening in the circumferential direction. In a case of viewing the first scroll 11 in the axial direction, the first discharge port 11b extends substantially in a tangential direction of an outer peripheral surface of the first scroll 11. The first scroll 11 sends out, from the first discharge port 11b by the rotation of the first impeller 3, air suctioned from the first suction port 11a. In the shown example, the first suction port 11a opens on an upper side in the axial direction (one side in the axial direction). In addition, the first discharge port 11b can send out air to a defroster blowing port and/or a vent blowing port of the vehicle.

The second scroll 12 has a second suction port 12a opening in the axial direction and a second discharge port 12b opening in the circumferential direction. In a case of viewing the second scroll 12 in the axial direction, the second discharge port 12b extends substantially in a tangential direction of an outer peripheral surface of the second scroll 12. The second scroll 12 sends out, from the second discharge port 12b by the rotation of the second impeller 4, air suctioned from the second suction port 12a. In the shown example, the second suction port 12a opens on an upper side in the axial direction (one side in the axial direction). In addition, the second discharge port 12b can send out air to a foot blowing port of the vehicle.

In the example shown in FIGS. 1 to 3, the first scroll 11 and the second scroll 12 are formed by dividing an internal space of an integrally molded scroll housing 10a by a partition wall 15. More specifically, the partition wall 15 extends from an outer peripheral wall of the scroll housing 10a toward the radially inner side, and divides a region of the internal space of the scroll housing 10a between an inner peripheral surface of the scroll housing 10a and outer peripheral surfaces of the impellers 3 and 4 in the axial direction (up-down). Further, the first scroll 11 and the second scroll 12 are formed on both sides of the partition wall 15.

In addition, in the example shown in FIGS. 1 to 3, the centrifugal blower 1 is a one-side suction type centrifugal blower, and an internal space of the first scroll 11 and an internal space of the second scroll 12 communicate with each other via the second suction port 12a.

In the shown example, the first impeller 3 and the second impeller 4 are integrally formed. More specifically, the first blade row of the first impeller 3 and the second blade row of the second impeller 4 are connected in the axial direction via an annular dividing wall 5. The dividing wall 5 divides spaces between the plurality of first blades 3a and spaces between the plurality of second blades 4a. A position of the dividing wall 5 in the axial direction substantially coincides with a position of the partition wall 15 of the scroll housing 10a in the axial direction.

In addition, an inner deflection member 6 is integrally molded with the impellers 3 and 4. The inner deflection member 6 may also be referred to as a cone portion. The inner deflection member 6 is a rotation body in a geometric sense. In the shown example, a disk-shaped central portion 6b and a side peripheral portion 6a connected to a lower end of the second impeller 4 are provided. The central portion 6b is coupled to the rotation shaft 2a of the motor 2. The central portion 6b is not necessarily in a disk shape, but may be in a known boss shape.

As shown in FIGS. 2 and 3, the separation cylinder 30 is inserted into the scroll housing 10a via the first suction port 11a. The separation cylinder 30 divides a flow of air suctioned into the scroll housing 10a from the first suction port 11a into a first airflow passing through an outside of the separation cylinder 30 and a second airflow passing through an inside of the separation cylinder 30.

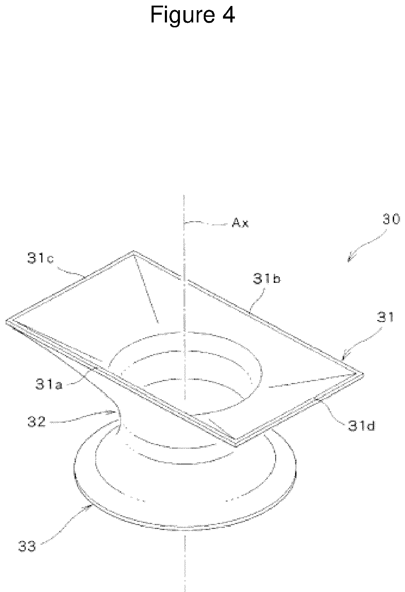

FIG. 4 shows a perspective view of the separation cylinder 30. As shown in FIG. 4, the separation cylinder 30 includes an inlet-side end portion (upper portion) 31, a body portion (central portion) 32 connected to the inlet-side end portion 31 from the other side in the axial direction, and an outlet-side end portion (lower portion) 33 connected to the body portion 32 from the other side in the axial direction. A cross section of the inlet-side end portion 31 perpendicular to the axial direction is a substantially rectangular shape. An upper end of the inlet-side end portion 31 includes a first edge portion 31a and a second edge portion 31b that extend parallel to each other, a third edge portion 31c that connects one end of the first edge portion 31a and one end of the second edge portion 31b, and a fourth edge portion 31d that connects the other end of the first edge portion 31a and the other end of the second edge portion 31b. A cross-sectional shape of the separation cylinder 30 smoothly changes from a rectangular shape to a circular shape (or substantially circular shape) toward the body portion 32 from the inlet-side end portion 31. The outlet-side end portion 33 of the separation cylinder 30 has a flare shape whose diameter increases toward a lower end.

The entire separation cylinder 30 may be integrally molded by resin injection molding. Alternatively, the inlet-side end portion 31 of the separation cylinder 30 and the body portion 32 and the outlet-side end portion 33 of the separation cylinder 30 may be formed separately and then connected.

As shown in FIGS. 2 and 3, the inlet-side end portion 31 is located on an outside of the scroll housing 10a (one side (upper side) in the axial direction of the first suction port 11a of the first scroll 11). In addition, the body portion 32 extends in the axial direction through a radially inner side of the first suction port 11a and a radially inner side of the first blade row of the first impeller 3. The outlet-side end portion 33 is provided such that the lower end thereof is located at substantially the same position as the partition wall 15 of the scroll housing 10a in the axial direction.

As described above, the separation cylinder 30 divides the flow of the air suctioned into the scroll housing 10a into the first airflow passing through a first passage 30A outside the separation cylinder 30 and the second airflow passing through a second passage 30B inside the separation cylinder 30. The first airflow passes through a ring-shaped region of the first suction port 11a of the first scroll 11 outside the outer peripheral surface of the separation cylinder 30 and flows into the radially inner side of the first blade row of the first impeller 3. The second airflow enters the inside of the separation cylinder 30 from an upper end of the separation cylinder 30, passes through the second suction port 12a of the second scroll 12, and flows into the radially inner side of the second blade row of the second impeller 4. The outlet-side end portion 33 of the separation cylinder 14 turns the first airflow that flows in outward in the radial direction and guides the first airflow to the first scroll 11, and turns the second airflow that flows in outward in the radial direction and guides the second airflow to the second scroll 12.

The air intake housing 20 is disposed on the one side of the blower case 10 in the axial direction to cover the first suction port 11a. The blower case 10 and the air intake housing 20 may be integrally molded, or may be separately manufactured and then coupled by a method such as screwing, bonding, or fitting. In one preferred embodiment, the separation cylinder 30 is a component separate from the blower case 10 and the air intake housing 20 and is supported at a predetermined position by the air intake housing 20.

An internal space of the air intake housing 20 communicates with the first suction port 11a of the scroll housing 10a. In other words, the first suction port 11a opens toward the internal space of the air intake housing 20. As shown in FIG. 1, the air intake housing 20 has first to third outside air introduction ports 21, 22, and 23 opening substantially forward and first to third inside air introduction ports 24, 25, and 26 opening substantially rearward. The first to third outside air introduction ports 21, 22, and 23 are coupled to an outlet (not shown) of an outside air introduction path provided in the vehicle to take in outside air of the vehicle. The first to third inside air introduction ports 24, 25, and 26 open to an interior of the vehicle, and inside air of the vehicle can be introduced into the air intake housing 20. The internal space of the air intake housing 20 forms an air passage between the first to third outside air introduction ports 21, 22, and 23 and the blower case 10 and between the first to third inside air introduction ports 24, 25, and 26 and the blower case 10. Hereafter, the internal space of the air intake housing 20 is also referred to as "air introduction space".

The air introduction space of the air intake housing 20 includes an upstream air introduction space 20A communicating with the outside air introduction ports 21, 22, and 23 and the inside air introduction ports 24, 25, and 26, and a downstream air introduction space 20B connected to the other side of the upstream air introduction space 20A in the axial direction. A filter 40 to be described later is disposed in the downstream air introduction space 20B. The upstream air introduction space 20A is partitioned by a first partition wall 27a and a second partition wall 27b that extend in the up-down direction and the front-rear direction. The first partition wall 27a and the second partition wall 27b are arranged in a left-right direction. The upstream air introduction space 20A is partitioned by the first partition wall 27a and the second partition wall 27b into a first upstream air introduction space 20A1 communicating with the first outside air introduction port 21, the first inside air introduction port 24, and the downstream air introduction space 20B, a second upstream air introduction space 20A2 communicating with the second outside air introduction port 22, the second inside air introduction port 25, and the downstream air introduction space 20B, and a third upstream air introduction space 20A3 communicating with the third outside air introduction port 23, the third inside air introduction port 26, and the downstream air introduction space 20B.

A first switching door 28a, a second switching door 28b, and a third switching door 28c are provided in the first to third upstream air introduction spaces 20A1, 20A2, and 20A3, respectively. In the shown example, each of the switching doors 28a, 28b, and 28c is of a type called a rotary door, and is rotatable around a pivot axis Bx extending in the left-right direction by an actuator (not shown). Each of the switching doors 28a, 28b, and 28c includes an arcuate wall 29 having an arcuate cross section centered on the pivot axis Bx.

The first switching door 28a provided in the first upstream air introduction space 20A1 is movable between a first position where the first outside air introduction port 21 is opened and the first inside air introduction port 24 is closed and a second position where the first outside air introduction port 21 is closed and the first inside air introduction port 24 is opened. By providing the first switching door 28a at the first position, an inflow of outside air from the first outside air introduction port 21 into the air intake housing 20 can be allowed and an inflow of inside air from the first inside air introduction port 24 into the air intake housing 20 can be blocked. In addition, by providing the first switching door 28a at the second position, the inflow of the outside air from the first outside air introduction port 21 into the air intake housing 20 can be blocked and the inflow of the inside air from the first inside air introduction port 24 into the air intake housing 20 can be allowed. In FIG. 1, the first switching door 28a is disposed at the first position.

In addition, the second switching door 28b provided in the second upstream air introduction space 20A2 is movable between a first position where the second outside air introduction port 22 is opened and the second inside air introduction port 25 is closed and a second position where the second outside air introduction port 22 is closed and the second inside air introduction port 25 is opened. By providing the second switching door 28b at the first position, an inflow of outside air from the second outside air introduction port 22 into the air intake housing 20 can be allowed and an inflow of inside air from the second inside air introduction port 25 into the air intake housing 20 can be blocked. In addition, by providing the second switching door 28b at the second position, the inflow of the outside air from the second outside air introduction port 22 into the air intake housing 20 can be blocked and the inflow of the inside air from the second inside air introduction port 25 into the air intake housing 20 can be allowed. In FIG. 1, the second switching door 28b is disposed at the second position.

In addition, the third switching door 28c provided in the third upstream air introduction space 20A3 is movable between a first position where the third outside air introduction port 23 is opened and the third inside air introduction port 26 is closed and a second position where the third outside air introduction port 23 is closed and the third inside air introduction port 26 is opened. By providing the third switching door 28c at the first position, an inflow of the outside air from the third outside air introduction port 23 into the air intake housing 20 can be allowed and an inflow of the inside air from the third inside air introduction port 26 into the air intake housing 20 can be blocked. In addition, by providing the third switching door 28c at the second position, the inflow of the outside air from the third outside air introduction port 23 into the air intake housing 20 can be blocked and the inflow of the inside air from the third inside air introduction port 26 into the air intake housing 20 can be allowed. In FIG. 1, the third switching door 28c is disposed at the first position.

The partition walls 27a, 27b of the air intake housing 20 and the separation cylinder 30 are disposed as follows with respect to each other. That is, the partition walls 27a, 27b and the separation cylinder 30 are disposed with respect to each other such that almost all of the air introduced into the air intake housing 21 from the first outside air introduction port 21 or the first inside air introduction port 24 and the air introduced into the air intake housing 20 from the third outside air introduction port 23 or the third inside air introduction port 26 pass through the first passage 30A outside the separation cylinder 30. In addition, the partition walls 27a, 27b and the separation cylinder 30 are disposed with respect to each other such that almost all of the air introduced into the air intake housing 20 from the second outside air introduction port 22 or the second inside air introduction port 25 passes through the second passage 30B inside the separation cylinder 30. More specifically, a lower end portion of the first partition wall 27a (an end portion 27aa facing the filter 40, which will be described later) and the first edge portion 31a of the inlet-side end portion 31 are aligned in a flow direction (substantially axial direction) of air flowing through the downstream air introduction space 20B of the air intake housing 20. In addition, a lower end portion of the second partition wall 27b (an end portion 27ba facing the filter 40, which will be described later) and the second edge portion 31b of the inlet-side end portion 31 are aligned in the flow direction of the air flowing through the downstream air introduction space 20B.

Next, the filter 40 will be described with reference to FIGS. 2, 3, and 5 to 8. As described above, the filter 40 is disposed in the downstream air introduction space 20B of the air intake housing 20 to cross the air flowing through the downstream air introduction space 20B. The filter 40 is provided to remove unusual odor and contaminants such as dust and particles in the air flowing into the air intake housing 20. The filter 40 is inserted into a slot or a rail (not shown) provided in the air intake housing 20, and is held between the first partition wall 27a and the inlet-side end portion 31 of the separation cylinder 30 and between the second partition wall 27b and the inlet-side end portion 31 of the separation cylinder 30.

The filter 40 includes a filtration member 41 that captures the contaminants in the air flowing into the air intake housing 20, and a pair of end plates 48, 49 that hold the filtration member 41. The filtration member 41 is formed of, for example, a nonwoven fabric. For example, a fiber of a resin such as polypropylene, polyester, or nylon is used as a material of the filtration member 41. In addition, the end plates 48, 49 are made of, for example, polyester or polypropylene.

The filtration member 41 has a pleated shape. More specifically, mountain-fold pleats 42 and valley-fold pleats 42 are alternately formed in the filtration member 41. The filtration member 41 has a plurality of partitioned surfaces 43 partitioned by the mountain-fold pleats 42 and the valley-fold pleats 42. Hereafter, a direction D1 in which the mountain-fold pleats 42 and the valley-fold pleats 42 extend is also referred to as "first direction D1". In addition, a direction D2 in which the mountain-fold pleats 42 and the valley-fold pleats 42 are arranged is also referred to as "second direction D2". The filter 40 is disposed such that an imaginary plane P spreading in the first direction D1 and the second direction D2 crosses the air flowing through the downstream air introduction space 20B.

The end plates 48, 49 are fixed to two end portions of the filtration member 41 in the first direction D1 to maintain the filtration member 41 in the pleated shape. Each of the end plates 48, 49 includes a single element having no joint portion in the second direction D2. Accordingly, a productivity of the filter 40 can be improved and a strength of the filter 40 can be improved as compared with a case where each of the end plates 48, 49 includes a plurality of elements each having a joint portion in the second direction D2.

The filtration member 41 includes a plurality of filtration portions 45a, 45b, and 45c arranged along the second direction D2. In addition, the filtration member 41 includes intermediate portions 46a, 46b each provided between the adjacent filtration portions. In the shown example, the filtration member 41 includes the first, second, and third filtration portions 45a, 45b, and 45c, and the first and second intermediates 46a, 46b. The first intermediate portion 46a is disposed between the first filtration portion 45a and the second filtration portion 45b. In addition, the second intermediate portion 46b is disposed between the second filtration portion 45b and the third filtration portion 45c.

Each of the filtration portions 45a, 45b, and 45c and each of the intermediate portions 46a and 46b include the plurality of partitioned surfaces 43. In the shown example, each of the first filtration portion 45a and third filtration portion 45c includes six partitioned surfaces 43. In addition, the second filtration portion 45b includes eight partitioned surfaces 43. In addition, each of the first intermediate portion 46a and the second intermediate portion 46b includes two partitioned surfaces 43.

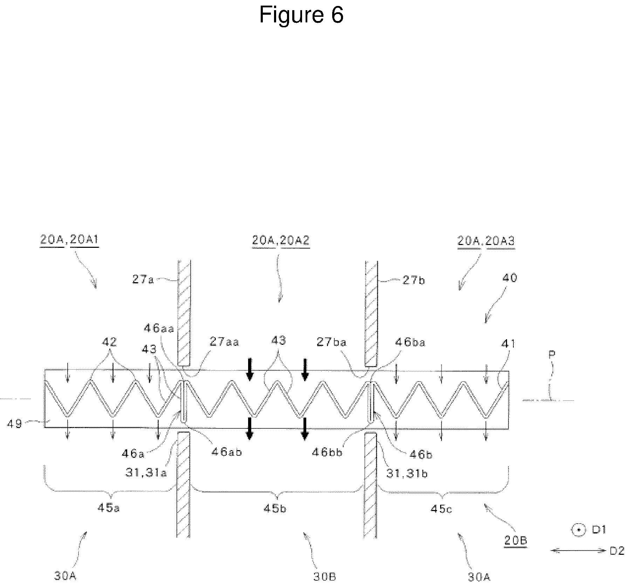

As shown in FIGS. 3 and 6, in the filtration portions 45a, 45b, and 45c, an angle formed by the two adjacent partitioned surfaces 43, 43 is larger than 0°. Meanwhile, in the intermediate portions 46a and 46b, an angle formed by the adjacent partitioned surfaces 43, 43 is 0°. In other words, in the intermediate portions 46a and 46b, the adjacent partitioned surfaces 43, 43 are overlapped with each other.

By overlapping the adjacent partitioned surfaces 43, 43, a structural strength at the intermediate portions 46a, 46b is increased, and deflection is reduced. As a result, a shape maintaining force against a weight of the filtration member 41 and a pressing force received from air passing through the filtration member 41 is increased, and deflection of the entire filtration member 41 is reduced or prevented. In this way, the strength of the filter 40 is improved. Further, since the plurality of partitioned surfaces 43, 43 are overlapped with each other in the intermediate portions 46a, 46b, it is difficult for the air to cross (permeate) the intermediate portions 46a, 46b in the second direction D2 as compared with the filtration portions 45a, 45b, and 45c. Therefore, a possibility that the air passed through the two adjacent filtration portions 45a, 45b; 45b, 45c crosses (permeates) the intermediate portions 46a, 46 in the second direction D2 and is mixed with each other is reduced. Accordingly, a possibility that, when the two adjacent filtration portions 45a, 45b and 45b, 45c filter different air (outside air and inside air), the air passed through one of the filtration portions 45a, 45b and 45b, 45c and the air passed through the other filtration portion are unintentionally mixed when passing through the filter 40 can be reduced. In other words, a separability of the air in the filter 40 can be improved.

The filter 40 is disposed such that the first direction D1 (therefore, a direction in which the first and second intermediate portions 46a, 46b extend) is along a direction (front-rear direction) in which the first partition wall 27a and the second partition wall 27b of the air intake housing 20 and the first edge portion 31a and the second edge portion 31b of the inlet-side end portion 31 of the separation cylinder 30 extend.

Further, as shown in FIG. 6, the first intermediate portion 46a is aligned with the end portion 27aa of the first partition wall 27a of the air intake housing 20 facing the filter 40 along the flow direction of the air passing through the downstream air introduction space 20B of the air intake housing 20. In addition, the second intermediate portion 46b is aligned with the end portion 27ba of the second partition wall 27b of the air intake housing 20 facing the filter 40 along the flow direction of the air passing through the downstream air introduction space 20B. Accordingly, air flowing into the first upstream air introduction space 20A1 is guided by the first partition wall 27a and the first intermediate portion 46a to pass through the first filtration portion 45a. Similarly, air flowing into the second upstream air introduction space 20A2 is guided by the first partition wall 27a and the first intermediate portion 46a and by the second partition wall 27b and the second intermediate portion 46b to pass through the second filtration portion 45b. In addition, air flowing into the third upstream air introduction space 20A3 is guided by the second partition wall 27b and the second intermediate portion 46b to pass through the third filtration portion 45c. Therefore, a possibility that the air from the first upstream air introduction space 20A1, the air from the second upstream air introduction space 20A2, and the air from the third upstream air introduction space 20A3 are unintentionally mixed when the air flows into the filter 40 from the upstream air introduction space 20A is reduced.

In particular, in the shown example, the end portion 27aa of the first partition wall 27a of the air intake housing 20 facing the filter 40 and the end portions 46aa, 46ba of the intermediate portions 46a, 46b on an upstream air introduction space 20A side are aligned along the flow direction of the air flowing through the downstream air introduction space 20B. Accordingly, the possibility that the air from the first upstream air introduction space 20A1, the air from the second upstream air introduction space 20A2, and the air from the third upstream air introduction space 20A3 are unintentionally mixed when the air flows into the filter 40 from the upstream air introduction space 20A is further effectively reduced.

In addition, the first intermediate portion 46a and the second intermediate portion 46b are aligned with the inlet-side end portion 31 of the separation cylinder 30 along the flow direction of the air passing through the downstream air introduction space 20B of the air intake housing 20. In the shown example, the first intermediate portion 46a and the second intermediate portion 46b are aligned with the first edge portion 31a and the second edge portion 31b of the inlet-side end portion 31 respectively along the above flow direction of the air. Accordingly, the air passed through the first and third filtration portions 45a and 45c is guided by the first intermediate portion 46a, the second intermediate portion 46b, and the inlet-side end portion 31 to flow outside the separation cylinder 30. In addition, the air passed through the second filtration portion 45b is guided by the first intermediate portion 46a, the second intermediate portion 46b, and the inlet-side end portion 31 to flow inside the separation cylinder 30. Therefore, a possibility that the air passed through the first and third filtration portions 45a, 45c and the air passed through the second filtration portion 45b are unintentionally mixed when the air flows from the filter 40 into the blower case 10 is reduced.

In particular, in the shown example, the end portions 46ab, 46bb of the first and second intermediate portions 46a, 46b facing the separation cylinder 30 and the first edge portion 31a and the second edge portion 31b of the inlet-side end portion 31 are aligned along the flow direction of the air flowing through the downstream air introduction space 20B. Accordingly, the possibility that the air passed through the first and third filtration portions 45a, 45c and the air passed through the second filtration portion 45b are unintentionally mixed when the air flows from the filter 40 into the blower case 10 is further effectively reduced.

In the shown example, in the first and second intermediate portions 46a, 46b, the partitioned surfaces 43 are perpendicular to the imaginary plane P defined by the first direction D1 and the second direction D2. Accordingly, if the filter 40 is disposed in the downstream air introduction space 20B such that the imaginary plane P crosses the air flowing the downstream air introduction space 20B of the air intake housing 20, the partitioned surfaces 43 of the intermediate portions 46a, 46b can be made to extend along the above flow direction of the air. In addition, when viewed in the above flow direction of the air, a region occupied by the intermediate portions 46a, 46b in the filtration member 41 can be minimized. Therefore, a possibility that a ventilation resistance of the filter 40 increases due to the presence of the intermediate portions 46a, 46b is reduced. In addition, a possibility that an area (an area viewed in the flow direction of the air) of the filtration portions 45a, 45b, and 45c of the filtration member 41 that remove contaminants and unusual odor is reduced due to the presence of the intermediate portions 46a and 46b is reduced. In addition, the intermediate portions 46a, 46b can be formed of the same filtration member as the partitioned surfaces 43. In other words, the filter 40 having the intermediate portions 46a and 46b can be manufactured without changing the number of components.

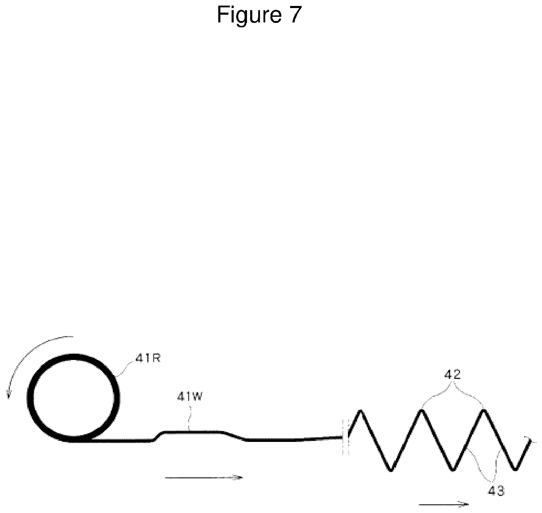

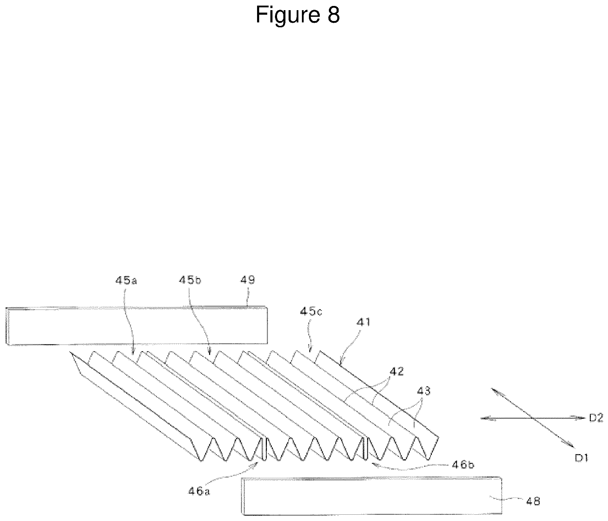

Such a filter 40 can be easily manufactured with a small number of man-hours. Hereafter, a method for manufacturing the filter 40 will be described with reference to FIGS. 7 and 8.

First, as shown in FIG. 7, a raw material roll 41R obtained by winding a filtration member web 41W in a roll shape is prepared. Next, the filtration member web 41W is fed out from the raw material roll 41R, and the mountain-fold pleats 42 and the valley-fold pleats 42 are alternately formed on the filtration member web 41W. The partitioned surfaces 43 are formed between the mountain-fold pleats 42 and the valley-fold pleats 42. Next, as understood from FIGS. 7 and 8, the filtration member web 41W is cut into a desired length along the first direction D1. Accordingly, a filtration member 41 on which the fold pleats 42 are formed is obtained.

Next, the partitioned surfaces 43 constituting the first intermediate portion 46a and the partitioned surfaces 43 constituting the second intermediate portion 46b are determined from the partitioned surfaces 43 partitioned by the fold pleats 42. Further, as shown in FIG. 8, the partitioned surfaces 43, 43 are held such that an angle formed by the adjacent partitioned surfaces 43, 43 is 0° (such that the adjacent partitioned surfaces 43, 43 are in close contact with each other) in each of the intermediate portions 46a, 46b. In addition, the partitioned surfaces 43, 43 are held such that an angle formed by the adjacent partitioned surfaces 43, 43 is larger than 0° in the filtration portions 45a, 45b, and 45c formed by the other partitioned surfaces 43.

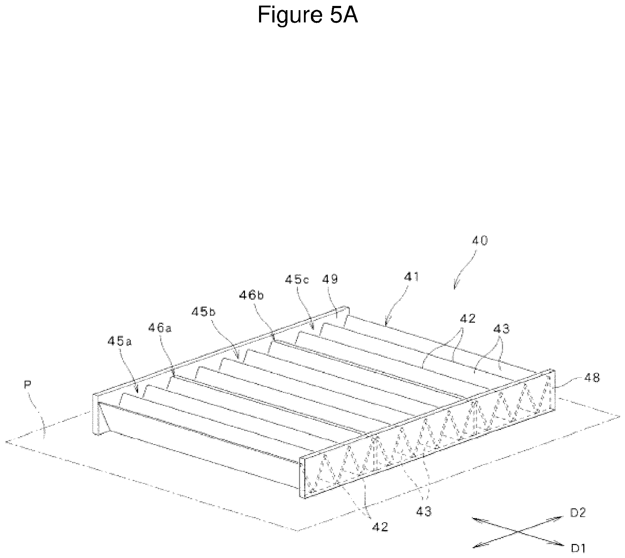

Next, the two end plates 48, 49 are prepared. Further, an adhesive is applied to two end portions of the filtration member 41 in the first direction D1 in which the partitioned surfaces 43 are held, one end plate 48 is bonded to one of the above two end portions, and the other end plate 49 is bonded to the other one of the above two end portions. Accordingly, the filter 40 shown in FIG. 5 is completed. Alternatively, although not shown, the two end portions in the first direction D1 of the filtration member 41 holding the partitioned surfaces 43 may be inserted into an injection molding mold, and the end plates 48, 49 may be injection-molded to fix shapes of the two end portions of the filtration member 41 to the end plates 48, 49. Such a manufacturing method may be referred to as insert molding.

Next, an operation of the centrifugal blower 1 shown in FIGS. 1 to 3 will be described.

In a first operation mode of the centrifugal blower 1, the first to third outside air introduction ports 21, 22, and 23 are opened, and the first to third inside air introduction ports 24, 25, and 26 are closed. This state is not shown. In this case, outside air introduced into the first upstream air introduction space 20A1 and the third upstream air introduction space 20A3 from the first outside air introduction port 21 and the third outside air introduction port 23 passes through the first filtration portion 45a and the third filtration portion 45c of the filter 40, passes through the first passage 30A outside the separation cylinder 30, and forms a first airflow flowing into the first blade row of the first impeller 3, respectively. In addition, outside air introduced into the second upstream air introduction space 20A2 from the second outside air introduction port 22 passes through the second filtration portion 45b of the filter 40, passes through the second passage 30B inside the separation cylinder 30, and forms a second airflow flowing into the second blade row of the second impeller 4. The first operation mode may also be referred to as an outside air mode.

In a second operation mode, the first outside air introduction port 21, the second inside air introduction port 25, and the third outside air introduction port 23 are opened, and the first inside air introduction port 24, the second outside air introduction port 22, and the third inside air introduction port 26 are closed. This state is shown in FIGS. 1 to 3. In this case, outside air introduced into the first upstream air introduction space 20A1 and the third upstream air introduction space 20A3 from the first outside air introduction port 21 and the third outside air introduction port 23 passes through the first filtration portion 45a and the third filtration portion 45c of the filter 40, passes through the first passage 30A outside the separation cylinder 30, and forms a first airflow flowing into the first blade row of the first impeller 3, respectively. In addition, inside air introduced into the second upstream air introduction space 20A2 from the second inside air introduction port 25 passes through the second filtration portion 45b of the filter 40, passes through the second passage 30B inside the separation cylinder 30, and forms the second airflow flowing into the second blade row of the second impeller 4. The second operation mode may also be referred to as an inside and outside air two-layer flow mode.

The second operation mode (the inside and outside air two-layer flow mode) is used, for example, when an operation is performed in a defroster foot mode. In this case, the outside air having a relatively small amount of moisture is blown out from a defroster blowing port of a vehicle interior toward a front window (not shown) of the vehicle, and the inside air having a relatively large amount of moisture is blown out from the foot blowing port (not shown) of the vehicle interior toward feet of an occupant.

In a third operation mode, the first to third inside air introduction ports 24, 25, and 26 are opened, and the first to third outside air introduction ports 21, 22, and 23 are closed. This state is not shown. In this case, the inside air introduced into the first upstream air introduction space 20A1 and the third upstream air introduction space 20A3 from the first inside air introduction port 24 and the third inside air introduction port 26 passes through the first filtration portion 45a and the third filtration portion 45c of the filter 40, passes through the first passage 30A outside the separation cylinder 30, and forms the first airflow flowing into the first blade row of the first impeller 3, respectively. In addition, inside air introduced into the second upstream air introduction space 20A2 from the second inside air introduction port 25 passes through the second filtration portion 45b of the filter 40, passes through the second passage 30B inside the separation cylinder 30, and forms the second airflow flowing into the second blade row of the second impeller 4. The third operation mode may also be referred to as an inside air mode.

Incidentally, when the vehicle air conditioner is operated in the inside and outside air two-layer flow mode, high separability between the first airflow (outside air) and the second airflow (inside air) is required. For example, as described above, when the vehicle air conditioner is operated in the inside and outside air two-layer flow mode, dried outside air is directed to a windshield so as to prevent fogging of the windshield. However, when the outside air directed to the windshield is mixed with moist inside air, there is a risk that an effect of the vehicle air conditioner of preventing the fogging of the windshield is reduced.

With respect to this point, the centrifugal blower 1 shown in FIGS. 1 to 3 is configured to improve the separability between the first airflow and the second air flow, as described above. That is, in the centrifugal blower 1 shown in FIGS. 1 to 3, the air passing through the filtration portions 45a, 45b, and 45c of the filter 40 is partitioned by the intermediate portions 46a, 46b of the filter 40. Therefore, a possibility that the air (outside air) passing through the first and third filtration portions 45a, 45c and the air (inside air) passing through the second filtration portion 45b are unintentionally mixed with each other is reduced. As a result, a possibility that, when the air conditioner is operated in the inside and outside air two-layer flow mode, a windshield fogging prevention function of the air conditioner is impaired due to the mixing of the inside air having high humidity into the air directed to the windshield is reduced.

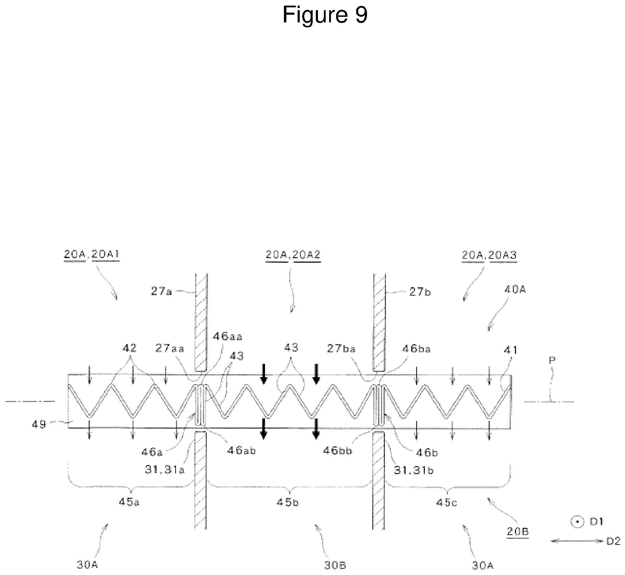

In the above example, each of the intermediate portions 46a, 46b includes two partitioned surfaces 43, but the invention is not limited thereto. As in a filter 40A shown in FIG. 9, each of intermediate portions 46a, 46b may include three or more partitioned surfaces 43. In this case, the strength of the filter 40 is improved, and the separability of the air by the intermediate portions 46a, 46b is also improved.

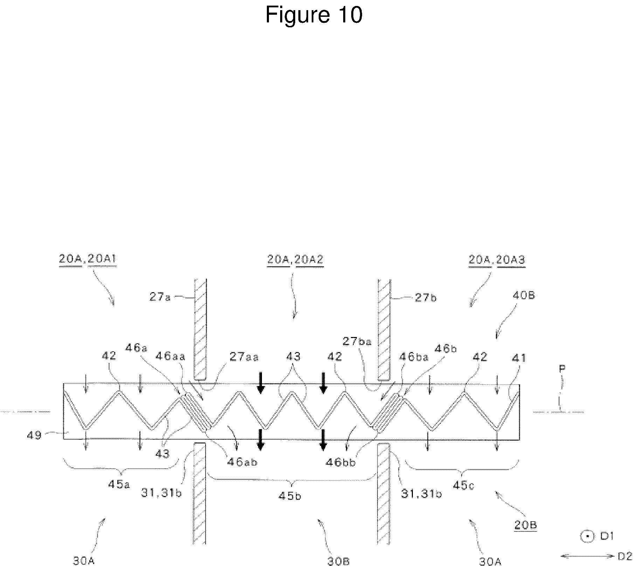

In addition, in the above example, in the intermediate portions 46a, 46b, the partitioned surfaces 43 are perpendicular to the imaginary plane P, but the invention is not limited thereto. In an example shown in FIG. 10, the partitioned surfaces 43 of the intermediate portions 46a, 46b of the filter 40B are inclined with respect to the imaginary plane P. In this case, the possibility that, when the intermediate portions 46a, 46b and the end portions 27aa, 27ba of the partition walls 27a, 27b of the air intake housing 20 facing the filter 40 are aligned along the flow direction of the air passing through the downstream air introduction space 20B of the air intake housing 20, the air from the first upstream air introduction space 20A1, the air from the second upstream air introduction space 20A2, and the air from the third upstream air introduction space 20A3 are unintentionally mixed when the air flows into the filter 40B from the upstream air introduction space 20A is also reduced. In addition, the possibility that, when the intermediate portions 46a and 46b and the inlet-side end portion 31 of the separation cylinder 30 are aligned along the flow direction of the air passing through the downstream air introduction space 20B of the air intake housing 20, the air passing through the first and third filtration portions 45a, 45c and the air passing through the second filtration portion 45b are unintentionally mixed when the air flows into the blower case 10 from the filter 40B is reduced.

In the example shown in FIG. 10, in the first and second intermediate portions 46a, 46b, the partitioned surfaces 43 are inclined with respect to the imaginary plane P so as to approach each other from one side to the other side of the imaginary plane P. Further, when viewed in the flow direction of the air flowing through the downstream air introduction space 20B, the end portions 46aa, 46ba of the first and second intermediate portions 46a, 46b on the upstream air introduction space 20A side are disposed at positions overlapping the first upstream air introduction space 20A1 and the third upstream air introduction space 20A3, respectively. In addition, when viewed in the flow direction of the air flowing through the downstream air introduction space 20B, the end portions 46ab, 46bb of the first and second intermediate portions 46a, 46b on a separation cylinder 30 side are disposed at positions overlapping the first edge portion 31a and the second edge portion 31b of the inlet-side end portion 31 of the separation cylinder 30, respectively. By providing the intermediate portions 46a and 46b in this way, a part of the air flowing through the first upstream air introduction space 20A1 and the third upstream air introduction space 20A3 flows into the second filtration portion 45b from gaps between the partition walls 27a, 27b and the intermediate portions 46a and 46b, and flows into the inside (the second passage 30B) of the separation cylinder 30. Accordingly, a possibility that a part of the air flowing through the second upstream air introduction space 20A2 flows into the first filtration portion 45a or the third filtration portion 45c and flows into the outside (the first passage 30A) of the separation cylinder 30 is effectively reduced. Therefore, the possibility that, when the air conditioner is operated in the inside and outside air two-layer flow mode, a windshield fogging prevention function of the air conditioner is impaired due to the mixing of the inside air having high humidity into the air directed to the windshield is effectively reduced.

However, the positions of the intermediate portions 46a, 46b with respect to the partition walls 27a, 27b and the separation cylinder 30 when the partitioned surfaces 43 of the intermediate portions 46a, 46b are inclined with respect to the imaginary plane P are not limited to the above-described positions. That is, when viewed in the flow direction of the air flowing through the downstream air introduction space 20B, the end portions 46aa, 46ba of the first and second intermediate portions 46a, 46b on the upstream air introduction space 20A side may be disposed at positions overlapping the end portions 27aa, 27ba of the first and second partition walls 27a, 27b facing the filter 40, respectively. In addition, when viewed in the flow direction of the air flowing through the downstream air introduction space 20B, the end portions 46ab, 46bb of the first and second intermediate portions 46a, 46b on a separation cylinder 30 side may be disposed inside the inlet-side end portion 31 of the separation cylinder 30. In this case, a part of the air flowing through the first upstream air introduction space 20A1 and the third upstream air introduction space 20A3 passes through the first and third filtration portions 45a, 45c, and then flows into the inside (the second passage 30B) of the separation cylinder 30 from gaps between the intermediate portions 46a and 46b and the inlet-side end portion 31. In this case, the possibility that the part of the air flowing through the second upstream air introduction space 20A2 flows into the outside (the first passage 30A) of the separation cylinder 30 is also effectively reduced. Therefore, the possibility that, when the air conditioner is operated in the inside and outside air two-layer flow mode, a windshield fogging prevention function of the air conditioner is impaired due to the mixing of the inside air having high humidity into the air directed to the windshield is effectively reduced.

Alternatively, when viewed in the flow direction of the air flowing through the downstream air introduction space 20B, the end portions 46aa, 46ba of the first and second intermediate portions 46a, 46b on the upstream air introduction space 20A side may be disposed at the positions overlapping the first upstream air introduction space 20A1 and the third upstream air introduction space 20A3, respectively. In addition, when viewed in the flow direction of the air flowing through the downstream air introduction space 20B, the end portions 46ab, 46bb of the first and second intermediate portions 46a, 46b on a separation cylinder 30 side may be disposed inside the inlet-side end portion 31 of the separation cylinder 30. In this case, the part of the air flowing through the first upstream air introduction space 20A1 and the third upstream air introduction space 20A3 flows into the second filtration portion 45b from the gaps between the partition walls 27a, 27b and the intermediate portions 46a, 46b, and flows into the inside (the second passage 30B) of the separation cylinder 30. In addition, the part of the air flowing through the first upstream air introduction space 20A1 and the third upstream air introduction space 20A3 passes through the first and third filtration portions 45a, 45c, and then flows into the inside (the second passage 30B) of the separation cylinder 30 from the gaps between the intermediate portions 46a , 46b and the inlet-side end portion 31. In this case, the possibility that the part of the air flowing through the second upstream air introduction space 20A2 flows into the outside (the first passage 30A) of the separation cylinder 30 is also effectively reduced. Therefore, the possibility that, when the air conditioner is operated in the inside and outside air two-layer flow mode, a windshield fogging prevention function of the air conditioner is impaired due to the mixing of the inside air having high humidity into the air directed to the windshield is effectively reduced.

In the first embodiment described above, the filter 40 includes the filtration member 41 in which the mountain-fold pleats 42 and the valley-fold pleats 42 are alternately formed and which has the partitioned surfaces 43 partitioned by the mountain-fold pleats 42 and the valley-fold pleats 42. In addition, the filter 40 includes the end plates 48, 49 that are fixed to the two end portions of the filtration member 41 in the direction D1 in which the mountain-fold pleats 42 and the valley-fold pleats 42 extend and which maintains the filtration member 41 in the pleated shape. The filtration member 41 includes the plurality of filtration portions 45a, 45b, and 45c and the intermediate portions 46a, 46b respectively provided between the adjacent filtration portions 45a, 45b and 45b, 45c that are arranged along the direction D2 in which the mountain-fold pleats 42 and the valley-fold pleats 42 are arranged and each including a plurality of the partitioned surfaces 43. Further, in the filtration portions 45a, 45b, and 45c, the angle formed by the adjacent partitioned surfaces 43, 43 is greater than 0°, and in the intermediate portions 46a, 46b, the angle formed by the adjacent partitioned surfaces 43, 43 is 0°.

According to such a filter 40, the strength of the filter 40 is improved by the presence of the intermediate portions 46a, 46b. In addition, such a filter 40 can be manufactured by the end plates 48, 49 each including a single element. Accordingly, the productivity of the filter 40 can be improved, and the strength of the filter 40 can be improved. In addition, a possibility that, when the two adjacent filtration portions 45a,45b and 45b, 45c filter different air (outside air and inside air), the air passed through one of the filtration portions 45a, 45b and 45b, 45c and the air passed through the other filtration portion are unintentionally mixed when the air passes through the filter 40 can be reduced. In other words, a separability of the air in the filter 40 can be improved.

In addition, in the modification shown in FIGS. 9 and 10, the intermediate portions 46a, 46b each include three or more partitioned surfaces 43. Accordingly, the strength of the filter 40 is improved, and the separability of the air by the intermediate portions 46a, 46b is also improved.

In addition, in the first embodiment and the example shown in FIG. 9, in the intermediate portions 46a, 46b, the partitioned surfaces 43 are perpendicular to the imaginary plane P defined by the direction D1 in which the mountain-fold pleats 42 and the valley-fold pleats 42 extend and the direction D2 in which the mountain-fold pleats 42 and the valley-fold pleats 42 are arranged. Accordingly, when the air passing through the filter 40 flows substantially perpendicularly to the imaginary plane P, the partitioned surfaces 43 of the intermediate portions 46a, 46b can be aligned with the flow direction of the air. In addition, when viewed in the above flow direction of the air, a region occupied by the intermediate portions 46a, 46b in the filtration member 41 can be minimized. Therefore, a possibility that a ventilation resistance of the filter 40 increases due to the presence of the intermediate portions 46a, 46b is reduced. In addition, a possibility that an area (an area viewed in the flow direction of the air) of the filtration portions 45a, 45b, and 45c of the filtration member 41 that remove contaminants and unusual odor is reduced due to the presence of the intermediate portions 46a and 46b is reduced.

In addition, in the modification shown in FIG. 10, in the intermediate portions 46a, 46b, the partitioned surfaces 43 are inclined with respect to the imaginary plane P defined by the direction D1 in which the mountain-fold pleats 42 and the valley-fold pleats 42 extend and the direction D2 in which the mountain-fold pleats 42 and the valley-fold pleats 42 are arranged. According to such a filter 40, a possibility that, when the filter 40 is incorporated into the centrifugal blower 1, a part of one of the two types of air passing through the filter 40 can be intentionally caused to flow into an air passage of the other air, and as a result, the other air flows into the air passage of the one air can be effectively reduced.

In addition, in the first embodiment and the modifications shown in FIGS. 9 and 10, the filtration member 41 includes the plurality of filtration portions 45a, 45b, and 45c and the intermediate portions 46a, 46b that are alternately arranged along the direction D2 in which the mountain-fold pleats 42 and the valley-fold pleats 42 are arranged and each including the plurality of the partitioned surfaces 43, 43. According to such a filter 40, a possibility that three or more air (air flowing into the first to third upstream air introduction spaces 20A1, 20A2, and 20A3) are unintentionally mixed and pass through the filter 40 can be reduced.

In addition, in the modification shown in FIG. 10, the filtration member 41 includes the first, second, and third filtration portions 45a, 45b, and 45c and the first and second intermediate portions 46a, 46b that are arranged along the direction D2 in which the mountain-fold pleats 42 and the valley-fold pleats 42 are arranged and each including the plurality of the partitioned surfaces 43. The first intermediate portion 46a is disposed between the first filtration portion 45a and the second filtration portion 45b, and the second intermediate portion 46b is disposed between the second filtration portion 45b and the third filtration portion 45c. Further, in the first and second intermediate portions 46a, 46b, the partitioned surfaces 43 are inclined with respect to the imaginary plane P defined by the direction D1 in which the mountain-fold pleats 42 and the valley-fold pleats 42 extend and the direction D2 in which the mountain-fold pleats 42 and the valley-fold pleats 42 are arranged, so as to approach each other from one side to the other side of the imaginary plane P. According to such a filter 40, when the filter 40 is incorporated into the centrifugal blower 1, a part of the air intended to pass through the first and third filtration portions 45a, 45c can be intentionally caused to flow into the air passage 30B of the air intended to pass through the second filtration portion 45b, and as a result, a possibility that the air intended to pass through the second filtration portion 45b flows into the air passage 30A of the air intended to pass through the first and third filtration portions 45a and 45c can be effectively reduced.

In addition, in the first embodiment described above, the centrifugal blower 1 for a vehicle includes the motor 2, the first impeller 3, the second impeller 4, the blower case 10, the air intake housing 20, and the above filter 40. The first impeller 3 includes the plurality of blades 3a forming the first circumferential blade row, and is rotationally driven by the motor 2 around the rotation axis Ax extending in the axial direction to blow out air in the radially inner space of the first blade row toward the radially outer side. The second impeller 4 includes the plurality of blades 4a forming the second circumferential blade row, and is rotationally driven by the motor 2 around the rotation axis Ax to blow out air in the radially inner space of the second blade row toward the radially outer side. The blower case 10 includes the first scroll 11 that accommodates the first impeller 3 and the second scroll 12 that accommodates the second impeller 4. The first scroll 11 has the first suction port 11a opening in the axial direction and the first discharge port 11b opening in the circumferential direction, and sends out, from the first discharge port 11b by the rotation of the first impeller 3, the air suctioned from the first suction port 11a. The second scroll 12 has the second suction port 12a opening in the axial direction and the second discharge port 12b opening in the circumferential direction, and sends out, from the second discharge port 12b by the rotation of the second impeller 4, the air suctioned from the second suction port 12a. The air intake housing 20 is connected to the blower case 10 and accommodates the filter 40 inside. In addition, the air intake housing 20 includes the outside air introduction ports 21, 22, and 23 that take in the outside air of the vehicle, the inside air introduction ports 24, 25, and 26 that take in the inside air of the vehicle, the upstream air introduction space 20A serving as an air passage between the outside air introduction ports 21, 22, and 23 and the filter 40 and between the inside air introduction ports 24, 25, and 26 and the filter 40, and the downstream air introduction space 20B that accommodates the filter 40 and serving as an air passage between the upstream air introduction space 20A and the blower case 10. The upstream air introduction space 20A is provided with the partition walls 27a, 27b that partition air introduced from the outside air introduction ports 21, 23 and air introduced from the inside air introduction port 25. In the downstream air introduction space 20B, the filter 40 is disposed such that the above imaginary plane P crosses the air flowing through the downstream air introduction space 20B. The end portions 27aa, 27ba of the partition walls 27a, 27b facing the filter 40 and the intermediate portions 46a, 46b of the filter 40 are aligned along the flow direction of the air flowing through the downstream air introduction space 20B.

According to such a centrifugal blower 1, the air flowing into each of the spaces (the first to third upstream air introduction spaces 20A1, 20A2, and 20A3) partitioned by the partition walls 27a, 27b is guided by the partition walls 27a, 27b and the intermediate portions 46a, 46b so as to pass through the corresponding filtration portions (the first to third filtration portions 45a, 45b, and 45c), respectively. Therefore, a possibility that the air from the above spaces 20A1, 20A2, and 20A3 is unintentionally mixed when the air flows into the filter 40 is reduced.

In addition, in the first embodiment, the first impeller 3 and the second impeller 4 are integrally formed. In addition, the first scroll 11 and the second scroll 12 are formed on two sides of the partition wall 15 in the axial direction by dividing the internal space of the integrally molded scroll housing 10a in the axial direction by the partition wall 15. The first scroll 11 is located at the one side in the axial direction. The first suction port 11a opens on the one side in the axial direction toward the downstream air introduction space 20B. The second scroll 12 is located on the other side in the axial direction. The second suction port 12a opens on the one side in the axial direction. The internal space of the first scroll 11 and the internal space of the second scroll 12 communicate with each other via the second suction port 12a. Further, the centrifugal blower 1 further includes the separation cylinder 30 inserted into the scroll housing 10a and dividing the flow of the air suctioned into the scroll housing 10a from the first suction port 11a into the first airflow passing through the outside of the separation cylinder 30 and the second airflow passing through the inside of the separation cylinder 30. The separation cylinder 30 includes the inlet-side end portion 31 located on the one side of the first scroll 11 in the axial direction. In addition, the separation cylinder 30 includes the body portion 32 that is connected to the inlet-side end portion 31 and extends in the axial direction through the radially inner side of the first suction port 11a and the radially inner side of the first blade row of the first impeller 3. In addition, the separation cylinder 30 includes the outlet-side end portion 33 that turns the first airflow outward in the radial direction and guides the first airflow to the first scroll 11, and turns the second airflow outward in the radial direction and guides the second airflow to the second scroll 12. Further, the inlet-side end portion 31 and the intermediate portions 46a, 46b of the filter 40 are aligned along the flow direction of the air flowing through the downstream air introduction space 20B.

According to such a centrifugal blower 1, the air that passes through each of the filtration portions 45a, 45b, and 45c is guided to the outside or the inside of the separation cylinder 30 by the intermediate portions 46a, 46b and the inlet-side end portion 31. Therefore, a possibility that air intended to flow through the outside of the separation cylinder 30 and air intended to flow inside the separation cylinder 30 are unintentionally mixed when the air flows from the filter 40 into the blower case 10 is reduced.

### <Second Embodiment>

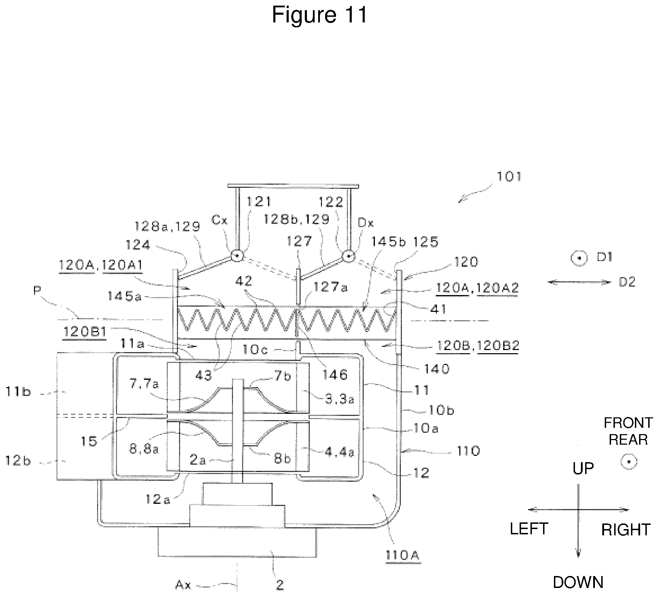

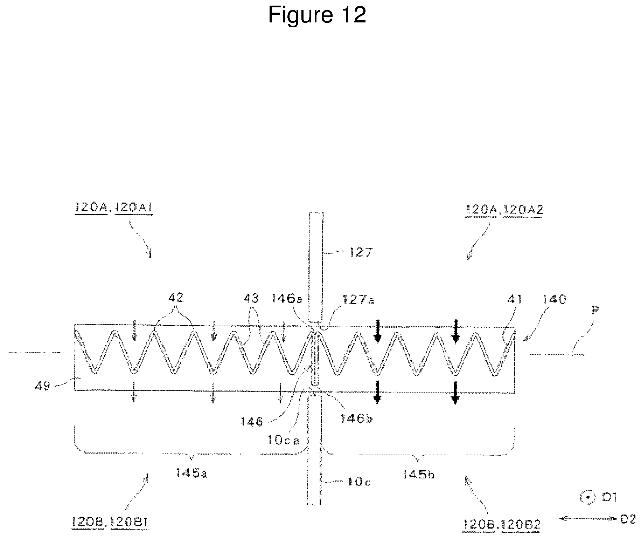

Next, a second embodiment will be described with reference to FIGS. 11 and 12. FIG. 11 is a diagram showing a meridian cross section of a centrifugal blower 101 according to the second embodiment. The centrifugal blower 101 shown in FIG. 11 is different from the centrifugal blower 1 shown in FIGS. 1 to 3 in that the centrifugal blower 101 does not include the separation cylinder 30. In addition, the centrifugal blower 101 shown in FIG. 11 is different from the centrifugal blower 1 shown in FIGS. 1 to 3 mainly in the following points. First, a blower case 110 includes an outer shell wall 10b surrounding the first scroll 11 and the second scroll 12. Further, the second suction port 12a of the second scroll 12 opens on the other side in the axial direction. In addition, the blower case 110 includes a scroll-side partition wall 10c that partitions a space between the first scroll 11 and a filter 140. In the second embodiment shown in FIG. 11, the same parts as those of the centrifugal blower 1 shown in FIGS. 1 to 3 are denoted by the same reference numerals, and a detailed description thereof will be omitted.

In the example shown in FIG. 11, the centrifugal blower 101 includes the motor 2, the first impeller 3, and the second impeller 4 that are rotationally driven by the motor 2, the blower case 110 that accommodates the first impeller 3 and the second impeller 4, and an air intake housing 120. Configurations of the motor 2, the first impeller 3, and the second impeller 4 are the same as those of the motor 2, the first impeller 3, and the second impeller 4 shown in FIGS. 2 and 3. However, in the example shown in FIG. 11, the first impeller 3 and the second impeller 4 are configured as independent portions.

The blower case 110 includes the first scroll 11 that accommodates the first impeller 3, the second scroll 12 that accommodates the second impeller 4, the outer shell wall 10b that surrounds the first scroll 11 and the second scroll, and the scroll-side partition wall 10c.

Configurations of the first scroll 11 and the second scroll 12 are the same as those of the first scroll 11 and the second scroll 12 illustrated in FIGS. 2 and 3 except that the second suction port 12a opens on a lower side in an axial direction (the other side in the axial direction). That is, the centrifugal blower 1 shown in FIGS. 2 and 3 is a single suction type centrifugal blower, whereas the centrifugal blower 101 shown in FIG. 11 is a double suction type centrifugal blower.

Here, in the example shown in FIG. 11, as described above, the first impeller 3 and the second impeller 4 are configured as independent portions. In addition, first and second inner deflection members 7, 8 are integrally formed with the first and second impellers 3, 4, respectively. The first inner deflection member 7 includes a side peripheral portion 7a connected to a lower end of the first impeller 3 and a disk-shaped central portion 7b. In addition, the second inner deflection member 8 includes a side peripheral portion 8a connected to an upper end of the second impeller 4 and a disk-shaped central portion 8b. Each of the central portions 7b, 8b is coupled to the rotation shaft 2a of the motor 2. In the second embodiment, the central portions 7b, 8b are not necessarily in a disk shape, and may be in a well-known boss shape.

An air passage that guides a part of air flowing into the blower case 110 to the second suction port 12a of the second scroll 12 is formed between the outer shell wall 10b and the first scroll 11 and between the outer shell wall 10b and the second scroll 12. In the shown example, the outer shell wall 10b surrounds the first scroll 11 and the second scroll 12 so as to face the first scroll 11 and the second scroll 12 in a radial direction and face the second scroll 12 in the axial direction, and an internal space 110A serving as an air passage between an internal space of the air intake housing 20 and the second suction port 12a is formed between the outer shell wall 10b and the first scroll 11 and between the outer shell wall 10b and the second scroll 12. Hereinafter, the internal space 110A formed between the outer shell wall 10b and the first scroll 11 and between the outer shell wall 10b and the second scroll 12 is also referred to as a "connection space 110A".

The air intake housing 120 is disposed on one side of the blower case 110 in the axial direction. The blower case 110 and the air intake housing 120 may be integrally formed, or may be separately manufactured and then coupled by a method such as screwing, bonding, or fitting.

The internal space (air introduction space) of the air intake housing 120 communicates with the first suction port 11a of the scroll housing 10a and the connection space 110A. As shown in FIG. 11, the air intake housing 120 has first and second outside air introduction ports 121, 122 opening substantially upward and first and second inside air introduction ports 124, 125 opening substantially in a left-right direction. The first and second outside air introduction ports 121, 122 are coupled to an outlet (not shown) of an outside air introduction path provided in the vehicle, and can introduce outside air into the air intake housing 120. The first and second inside air introduction ports 124, 125 open to an interior of a vehicle, and inside air (air inside the vehicle interior) can be introduced into the air intake housing 120.

The air introduction space of the air intake housing 120 includes an upstream air introduction space 120A that communicates with the outside air introduction ports 121, 122 and the inside air introduction ports 124, 125, and a downstream air introduction space 120B that is connected to the other side of the upstream air introduction space 120A in the axial direction and to which the filter 140 is disposed. The upstream air introduction space 120A is partitioned by a partition wall 127 that extends in an up-down direction and a front-rear direction. The upstream air introduction space 120A is partitioned by the partition wall 127 into a first upstream air introduction space 120A1 communicating with the first outside air introduction port 121, the first inside air introduction port 124, and the downstream air introduction space 120B, and a second upstream air introduction space 120A2 communicating with the second outside air introduction port 122, the second inside air introduction port 125, and the downstream air introduction space 120B.

First and second switching doors 128a, 128b are provided in the first and second upstream air introduction spaces 120A1, 120A2, respectively. In the shown example, each of the switching doors 128a, 128b is of a type called a cantilever type door, and is rotatable about pivot axis Cx and Dx extending in the front-rear direction by an actuator (not shown). Each of the switching doors 128a, 128b includes a flat door plate 129.

The first switching door 128a provided in the first upstream air introduction space 120A1 is movable between a first position where the first outside air introduction port 121 is opened and the first inside air introduction port 124 is closed and a second position where the first outside air introduction port 121 is closed and the first inside air introduction port 124 is opened. By providing the first switching door 128a at the first position, an inflow of outside air from the first outside air introduction port 121 into the air intake housing 120 can be allowed and inflow of inside air from the first inside air introduction port 124 into the air intake housing 120 can be blocked. In addition, by providing the first switching door 128a at the second position, the inflow of the outside air from the first outside air introduction port 121 into the air intake housing 120 can be blocked and the inflow of the inside air from the first inside air introduction port 124 into the air intake housing 120 can be allowed. In FIG. 11, the first switching door 128a is disposed at the first position.

In addition, the second switching door 128b provided in the second upstream internal space 120A2 is movable between a first position where the second outside air introduction port 122 is opened and the second inside air introduction port 125 is closed and a second position where the second outside air introduction port 122 is closed and the second inside air introduction port 125 is opened. By providing the second switching door 128b at the first position, an inflow of outside air from the second outside air introduction port 122 into the air intake housing 120 can be allowed and inflow of inside air from the second inside air introduction port 125 into the air intake housing 120 can be blocked. In addition, by providing the second switching door 128b at the second position, the inflow of the outside air from the second outside air introduction port 122 into the air intake housing 120 can be blocked and the inflow of the inside air from the second inside air introduction port 125 into the air intake housing 120 can be allowed. In FIG. 11, the second switching door 128b is disposed at the second position.

A space between the first scroll 11 and the filter 140 is partitioned by the scroll-side partition wall 10c extending in the up-down direction and the front-rear direction. The scroll-side partition wall 10c partitions the space between the first scroll 11 and the filter 140 into a first filter-scroll space 120B1 in which the first suction port 11a opens and a second filter-scroll space 120B1 that communicates with the connection space 110A. A lower end portion (the other end portion in the axial direction) of the scroll-side partition wall 10c is connected to an upper surface (one side surface in the axial direction) of the first scroll 11.

The partition wall 127 of the air intake housing 120 and the scroll-side partition wall 10c are disposed as follows with respect to each other. That is, the partition wall 127 and the scroll-side partition wall 10c are disposed with respect to each other such that almost all of the air introduced into the air intake housing 120 from the first outside air introduction port 121 or the first inside air introduction port 124 passes through the first filter-scroll space 120B1, and almost all of the air introduced into the air intake housing 120 from the second outside air introduction port 122 or the second inside air introduction port 125 passes through the second filter-scroll space 120B2. More specifically, as shown in FIG. 12, an end portion (lower end portion) 127a of the partition wall 127 facing the filter 140 and an end portion (upper end portion) 10ca of the scroll-side partition wall 10c facing the filter 140 are aligned in a flow direction (substantially axial direction) of the air flowing through the downstream air introduction space 120B of the air intake housing 120.

The filter 140 is inserted into a slot or a rail (not shown) provided in the air intake housing 120, and is held between the partition wall 127 and the scroll-side partition wall 10c. The filter 140 shown in FIG. 11 is configured in the same manner as the filter shown in FIGS. 2 and 3. However, the number of the filtration portions and the intermediate portions provided in the filter 140 shown in FIG. 11 is different from that of the filter 40 shown in FIGS. 2 and 3. The filter 140 shown in FIG. 11 includes two filtration portions (first and second filtration portions 145a, 145b) and one intermediate portion 146 provided between the two filtration portions 145a, 145b. In each of the filtration portions 145a, 145b, an angle formed by the adjacent partitioned surfaces 43, 43 is larger than 0°. Meanwhile, in the intermediate portion 146, an angle formed by the adjacent partitioned surfaces 43, 43 is 0°.

The filter 140 is disposed such that the first direction D1 (therefore, a direction in which the intermediate portion 146 extends) is along a direction (the front-rear direction) in which the partition wall 127 and the scroll-side partition wall 10c extend.

Further, the intermediate portion 146 is aligned with the end portion 127a of the partition wall 127 of the air intake housing 120 facing the filter 140 along the flow direction of the air passing through the downstream air introduction space 120B of the air intake housing 120. Accordingly, air flowing into the first upstream air introduction space 120A1 and air flowing into the second upstream air introduction space 120A2 are guided by the partition wall 127 and the intermediate portion 146 so as to pass through the first filtration portion 145a and the second filtration portion 145b, respectively. Therefore, a possibility that the air from the first upstream air introduction space 120A1 and the air from the second upstream air introduction space 120A2 are unintentionally mixed when the air flows into the filter 140 from the upstream air introduction space 120A is reduced.

In particular, in the shown example, the end portion 127a of the partition wall 127 of the air intake housing 120 facing the filter 140 and an end portion 146a of the intermediate portion 146 on an upstream air introduction space 120A side are aligned along the flow direction of the air flowing through the downstream air introduction space 120B. Accordingly, the possibility that the air from the first upstream air introduction space 120A1 and the air from the second upstream air introduction space 120A2 are unintentionally mixed when the air flows into the filter 140 from the upstream air introduction space 120A is further effectively reduced.

In addition, the intermediate portion 146 is aligned with the end portion (upper end portion) 10ca of the scroll-side partition wall 10c facing the filter 140 along the flow direction of the air passing through the downstream air introduction space 120B of the air intake housing 120. Accordingly, the air passed through the first and second filtration portions 145a, 145b is guided by the intermediate portion 146 and the scroll-side partition wall 10c so as to flow into the first filter-scroll space 120B1 and the second filter-scroll space 120B2, respectively. Therefore, a possibility that the air passed through the first filtration portion 145a and the air passed through the second filtration portion 145b are unintentionally mixed when the air flows from the filter 140 into the blower case 110 is reduced.

In particular, in the shown example, the end portion 146b of the intermediate portion 146 facing the scroll-side partition wall 10c and the end portion (the upper end portion) 10ca of the scroll-side partition wall 10c facing the filter 140 are aligned along the flow direction of the air flowing through the downstream air introduction space 120B. Accordingly, the possibility that the air passed through the first filtration portion 145a and the air passed through the second filtration portion 145b are unintentionally mixed when the air flows from the filter 140 into the blower case 110 is further effectively reduced.

Next, an operation of the centrifugal blower 101 shown in FIG. 11 will be described.

In a first operation mode of the centrifugal blower 101, the first and second outside air introduction ports 121, 122 are opened, and the first and second inside air introduction ports 124, 125 are closed. This state is not shown. In this case, outside air introduced into the first upstream air introduction space 120A1 from the first outside air introduction port 121 passes through the first filtration portion 145a of the filter 140, passes through the first filter-scroll space 120B1 and the first suction port 11a, and forms a first airflow flowing into a first blade row of the first impeller 3. In addition, outside air introduced into the second upstream air introduction space 120A2 from the second outside air introduction port 122 passes through the second filtration portion 145b of the filter 140, passes through the second filter-scroll space 120B2, the connection space 110A, and the second suction port 12a, and forms a second airflow flowing into a second blade row of the second impeller 4. The first operation mode may also be referred to as an outside air mode.

In a second operation mode, the first outside air introduction port 121 and the second inside air introduction port 125 are opened, and the first inside air introduction port 124 and the second outside air introduction port 122 are closed. This state is shown in FIG. 11. In this case, outside air introduced into the first upstream air introduction space 120A1 from the first outside air introduction port 121 passes through the first filtration portion 145a of the filter 140, passes through the first filter-scroll space 120B1 and the first suction port 11a, and forms a first airflow flowing into a first blade row of the first impeller 3. In addition, inside air introduced into the second upstream air introduction space 120A2 from the second inside air introduction port 125 passes through the second filtration portion 145b of the filter 140, passes through the second filter-scroll space 120B2, the connection space 110A, and the second suction port 12a, and forms the second airflow flowing into the second blade row of the second impeller 4. The second operation mode may also be referred to as an inside and outside air two-layer flow mode.

In a third operation mode, the first and second inside air introduction ports 124 and 125 are opened, and the first and second outside air introduction ports 121 and 122 are closed. This state is not shown. In this case, the inside air introduced into the first upstream air introduction space 120A1 from the first inside air introduction port 124 passes through the first filtration portion 145a of the filter 140, passes through the first filter-scroll space 120B1 and the first suction port 11a, and forms the first airflow flowing into the first blade row of the first impeller 3. In addition, inside air introduced into the second upstream air introduction space 120A2 from the second inside air introduction port 125 passes through the second filtration portion 145b of the filter 140, passes through the second filter-scroll space 120B2, the connection space 110A, and the second suction port 12a, and forms the second airflow flowing into the second blade row of the second impeller 4. The third operation mode may also be referred to as an inside air mode.

In the centrifugal blower 101 shown in FIGS. 11 and 12, the air passing through the filtration portions 145a, 145b of the filter 140 is partitioned by the intermediate portion 146 of the filter 140. Therefore, a possibility that the air (outside air) passing through the first filtration portion 145a and the air (inside air) passing through the second filtration portion 145b are unintentionally mixed with each other is reduced. As a result, a possibility that, when the air conditioner is operated in the inside and outside air two-layer flow mode, a windshield fogging prevention function of the air conditioner is impaired due to the mixing of the inside air having high humidity into the air directed to the windshield is reduced.

In the centrifugal blower 101 according to the second embodiment described above, the first scroll 11 is located on one side in the axial direction. The first suction port 11a opens on the one side in the axial direction toward the downstream air introduction space 120B. The second scroll 12 is located on the other side in the axial direction. The second suction port 12a opens on the other side in the axial direction. Further, the blower case 110 further includes the outer shell wall 10b surrounding the first scroll 11 and the second scroll 12 so as to face the first scroll 11 and the second scroll 12 in a radial direction and face the second scroll 12 in the axial direction. The connection space 110A serving as an air passage between the downstream air introduction space 120B and the second suction port 12a is formed between the outer shell wall 10b and the first scroll 11 and between the outer shell wall 10b and the second scroll 12. In addition, the blower case 110 includes the scroll-side partition wall 10c that partitions a space between the first scroll 11 and the filter 140 into the space 120B1 in which the first suction port 11a opens and the space 120B2 that communicates with the connection space 110A. The scroll-side partition wall 10c and the intermediate portion 146 of the filter 140 are aligned along the flow direction of the air flowing through the downstream air introduction space 120B.

According to such a centrifugal blower 101, the air that passes through each of the filtration portions 145a, 145b is guided to the first suction port 11a and the connection space 110A by the intermediate portions 146 and the scroll-side partition wall 10c. Therefore, a possibility that air intended to flow into the first scroll 11 and air intended to flow into the second scroll 12 are unintentionally mixed when the air flows from the filter 140 into the blower case 110 is reduced.

### Industrial Applicability

The blower and the filter for a vehicle according to the invention can be industrially manufactured and used as an object of commercial transaction, and thus can be industrially used with economic value.

### Reference Signs List

1, 101 centrifugal blower
2 motor
3 first impeller
4 second impeller
10, 110 blower case
10b outer shell wall
10c scroll-side partition wall
11 first scroll
11a first suction port
12 second scroll
12a second suction port
20, 120 air intake housing
21, 22, 23, 121, 122 outside air introduction port
24, 25, 26, 124, 125 inside air introduction port
27a, 27b, 127 partition wall
30 separation cylinder
31 inlet-side end portion
32 body portion
33 outlet-side end portion
40, 40A, 40B, 140 filter
41 filtration member
42 fold pleat
43 partitioned surface
45a, 45b, 45c, 145a, 145b filtration portion
46a, 46b, 146 intermediate portion
110A connection space
P imaginary surface

## Claims

1. A filter (40; 40A; 40B; 140), comprising:
a filtration member (41) in which mountain-fold pleats (42) and valley-fold pleats (42) are alternately formed and that has a partitioned surface (43) partitioned by the mountain-fold pleat (42) and the valley-fold pleat (42); and
end plates (48, 49) fixed to two end portions of the filtration member (41) in a direction (D1) in which the mountain-fold pleats (42) and the valley-fold pleats (42) extend and configured to maintain the filtration member (41) in a pleated shape, wherein
the filtration member (41) includes a plurality of filtration portions (45a, 45b, 45c; 145a, 145b) and intermediate portions (46a, 46b; 146) each provided between the adjacent filtration portions, the plurality of filtration portions and the intermediate portions being arranged along a direction (D2) in which the mountain-fold pleats (42) and the valley-fold pleats (42) are arranged and each including a plurality of the partitioned surfaces (43, 43),
in the filtration portions (45a, 45b, 45c; 145a, 145b), an angle formed by the adjacent partitioned surfaces (43, 43) is greater than 0°, and
in the intermediate portions (46a, 46b; 146), an angle formed by the adjacent partitioned surfaces (43, 43) is 0°.

2. The filter (40A; 40B) according to claim 1, wherein
the intermediate portions (46a, 46b) includes three or more partitioned surfaces (43).

3. The filter (40; 40A; 140) according to claim 1 or 2, wherein
in the intermediate portions (46a, 46b; 146), the partitioned surfaces (43) are perpendicular to an imaginary plane (P) defined by the direction (D1) in which the mountain-fold pleats (42) and the valley-fold pleats (42) extend and the direction (D2) in which the mountain-fold pleats (42) and the valley-fold pleats (42) are arranged.

4. The filter (40B) according to claim 1 or 2, wherein
in the intermediate portions (46a, 46b), the partitioned surfaces (43) are inclined with respect to an imaginary plane (P) defined by the direction (D1) in which the mountain-fold pleats (42) and the valley-fold pleats (42) extend and the direction (D2) in which the mountain-fold pleats (42) and the valley-fold pleats (42) are arranged.

5. The filter (40; 40A; 40B) according to any one of claims 1 to 4, wherein
the filtration member (41) includes the plurality of filtration portions (45a, 45b, and 45c) and the plurality of intermediate portions (46a, 46b) that are alternately arranged along the direction (D2) in which the mountain-fold pleats (42) and the valley-fold pleats (42) are arranged and each including the plurality of the partitioned surfaces (43, 43).

6. The filter (40B) according to claim 4, wherein
the filtration member (41) includes the first, second, and third filtration portions (45a, 45b, 45c) and the first and second intermediate portions (46a, 46b) that are arranged along the direction (D2) in which the mountain-fold pleats (42) and the valley-fold pleats (42) are arranged and each including the plurality of partitioned surfaces (43),
the first intermediate portion (46a) is disposed between the first and second filtration portions (45a, 45b),
the second intermediate portion (46b) is disposed between the second and third filtration portions (45b, 45c), and
in the first and second intermediate portions (46a, 46b), the partitioned surfaces (43) are inclined with respect to the imaginary plane (P) defined by the direction (D1) in which the mountain-fold pleats (42) and the valley-fold pleats (42) extend and the direction (D2) in which the mountain-fold pleats (42) and the valley-fold pleats (42) are arranged so as to approach each other from one side to the other side of the imaginary plane (P).

7. A centrifugal blower (1; 101) for a vehicle, comprising:
a motor (2);
a first impeller (3) including a plurality of blades (3a) forming a first circumferential blade row, rotationally driven by the motor (2) around a rotation axis (Ax) extending in an axial direction, and configured to blow out air in a radially inner space of the first blade row toward a radially outer side;
a second impeller (4) including a plurality of blades (4a) forming a second circumferential blade row, rotationally driven by the motor (2) around the rotation axis (Ax), and configured to blow out air in a radially inner space of the second blade row toward a radially outer side;
a blower case (10; 110) including a first scroll (11) configured to accommodate the first impeller (3), including a first suction port (11a) opening in the axial direction and a first discharge port (11b) opening in a circumferential direction, and configured to send out, from the first discharge port (11b) by rotation of the first impeller (3), air suctioned from the first suction port (11a), and a second scroll (12) configured to accommodate the second impeller (4), including a second suction port (12a) opening in the axial direction and a second discharge port (12b) opening in a circumferential direction, and configured to send out, from the second discharge port (12b) by rotation of the second impeller (4), air suctioned from the second suction port (12a);
an air intake housing (20; 120) connected to the blower case (10), configured to accommodate the filter (40; 40A; 40B; 140) according to any one of claims 1 to 6 therein, and including outside air introduction ports (21, 22, 23; 121, 122) configured to take in outside air of a vehicle, inside air introduction ports (24, 25, 26; 124, 125) configured to take in inside air of the vehicle, an upstream air introduction space (20A; 120A) serving as an air passage between the outside air introduction ports (21, 22, 23; 121, 122) and the filter and between the inside air introduction ports (24, 25, 26; 124, 125) and the filter, and a downstream air introduction space (20B; 120B) configured to accommodate the filter and serving as an air passage between the upstream air introduction space (20A; 120A) and the blower case (10; 110), wherein
the upstream air introduction space (20A; 120A) is provided with partition walls (27a, 27b; 127) configured to partition the air introduced from the outside air introduction ports (21, 23; 121) and the air introduced from the inside air introduction port (25; 125),
in the downstream air introduction space (20B; 120B), the filter (40; 40A; 40B; 140) is disposed such that an imaginary plane (P) defined by the direction (D1) in which the mountain-fold pleats (42) and the valley-fold pleats (42) extend and the direction (D2) in which the mountain-fold pleats (42) and the valley-fold pleats (42) are arranged crosses air flowing through the downstream air introduction space (20B; 120B), and
end portions (27aa, 27ba; 127a) of the partition walls (27a, 27b; 127) facing the filter (40; 40A; 40B; 140) and the intermediate portions (46a, 46b; 146) of the filter (40; 40A; 40B; 140) are aligned along a flow direction of the air flowing through the downstream air introduction space (20B; 120B).

8. The centrifugal blower (1) according to claim 7, wherein
the first impeller (3) and the second impeller (4) are integrally formed,
the first scroll (11) and the second scroll (12) are formed on both sides of a partition wall (15) in the axial direction by dividing an internal space of an integrally molded scroll housing (10a) by the partition wall (15) in the axial direction,
the first scroll (11) is located on one side in the axial direction,
the first suction port (11a) opens toward the downstream air introduction space (20B) on the one side in the axial direction,
the second scroll (12) is located on the other side in the axial direction,
the second suction port (12a) is open on the one side in the axial direction,
an internal space of the first scroll (11) and an internal space of the second scroll (12) communicate with each other via the second suction port (12a),
the centrifugal blower (1) further includes a separation cylinder (30) inserted into the scroll housing (10a) and configured to divide an airflow suctioned into the scroll housing (10a) from the first suction port (11a) into a first airflow passing through an outer side of the separation cylinder (30) and a second airflow passing through an inner side of the separation cylinder (30),
the separation cylinder (30) includes an inlet-side end portion (31) located on the one side of the first scroll (11) in the axial direction, a body portion (32) connected to the inlet-side end portion (31) and extending in the axial direction through a radially inner side of the first suction port (11a) and the radially inner side of the first blade row of the first impeller (3), and an outlet-side end portion (33) configured to turn the first airflow outward in a radial direction to guide the first airflow to the first scroll (11) and turn the second airflow outward in the radial direction to guide the second airflow to the second scroll (12), and
the inlet-side end portion (31) and the intermediate portions (46a, 46b) of the filter (40) are aligned along the flow direction of the air flowing through the downstream air introduction space (20B).

9. The centrifugal blower (101) according to claim 7, wherein
the first scroll (11) is located on the one side in the axial direction,
the first suction port (11a) opens toward the downstream air introduction space (120B) on the one side in the axial direction,
the second scroll (12) is located on the other side in the axial direction,
the second suction port (12a) opens on the other side in the axial direction,
the blower case (110) further includes:
an outer shell wall (10b) configured to surround the first scroll (11) and the second scroll (12) so as to face the first scroll (11) and the second scroll (12) in a radial direction and face the second scroll (12) in the axial direction, in which a connection space (110A) serving as an air passage between the downstream air introduction space (120B) and the second suction port (12a) is formed between the outer shell wall (10b) and the first scroll (11) and between the outer shell wall (10b) and the second scroll (12); and
a scroll-side partition wall (10c) configured to partition a space between the first scroll (11) and the filter (140) into a space (120B1) in which the first suction port (11a) opens and a space (120B2) communicating with the connection space (110A), and
the scroll-side partition wall (10c) and the intermediate portion (146) of the filter (140) are aligned along the flow direction of the air flowing through the downstream air introduction space (120B).
